# EUROPEAN PATENT SPECIFICATION

(11) **EP 3 278 938 B1**
(45) Date of publication and mention of the grant of the patent: **06.11.2019**
(21) Application number: 17175677.8
(22) Date of filing: 13.06.2017
(51) Int. Cl.: B25J 9/00, B25J 9/08

(54) **WEARABLE APPARATUS FOR ASSISTING A HUMAN WHEN PERFORMING A LOAD-INVOLVED TASK**
WEARABLE-VORRICHTUNG ZUR UNTERSTÜTZUNG EINES MENSCHEN BEIM AUSFÜHREN EINER AUFGABE, DIE EINE LAST INVOLVIERT
APPAREIL PORTABLE DESTINÉ À ASSISTER UN ÊTRE HUMAIN LORS DE L'EXÉCUTION D'UNE TÂCHE IMPLIQUANT UNE CHARGE

(30) Priority: 04.08.2016 DE 102016214432
(43) Date of publication of application: 07.02.2018
(73) Proprietor: Airbus Operations GmbH, 21129 Hamburg (DE)
(72) Inventor: KROHNE, Ingo, 21129 Hamburg (DE); GOEHLICH, Robert Alexander, 21129 Hamburg (DE); WEIDNER, Robert, 29581 Bohlsen (DE); YAO, Zhejun, 22149 Hamburg (DE); FETTE, Marc, 21073 Hamburg (DE); WULFSBERG, Jens, 20457 Hamburg (DE)
(74) Representative: Schicker, Silvia

(56) References cited:
- WO-A1-2012/154580
- FR-A1- 2 993 811
- JP-A- 2014 113 666
- US-A1- 2015 316 204
- US-A1- 2016 151 906

## Description

The present invention relates to a wearable apparatus assisting a human. In particular, the present invention relates to a wearable apparatus assisting the human when performing a task involving a load, such as the load of a tool, a workpiece or the weight of the human.

A plurality of tasks to be performed by a human involve lifting of a load, such as holding a tool used to perform the task in front of or above the human and holding a workpiece or installation structure. These loads strain the body of the human, and in particular the human's musculoskeletal system. Although forklifts, jigs, robots and other helping machines are employed, many professions still include lifting and holding objects and tools. These tasks often involve that the human has to bring the body into a specific posture. Such posture can be unnatural and provides additional strain to the human's musculoskeletal system.

Where a robot or other machinery cannot help, exoskeletons were developed supporting the body of the human when performing certain tasks. However, such exoskeletons often hinder movement of the human in general or prevent that the human reaches certain postures, i.e., the human may not reach a workpiece or cannot bring a tool into a required position. Moreover, exoskeletons are not available in every required size, so that not everybody can wear an exoskeleton. Customized exoskeletons are quite cost intensive. Likewise, costs increase for provisioning multiple exoskeletons of various sizes as well as for different tasks to be performed with the respective exoskeleton.

Related wearable apparatuses and their use are disclosed in US2015/316204A1, FR2993811A1, JP2014113666A or WO2012/154580A1.

It is an object of the present invention to provide a wearable apparatus for assisting a human that is cost effective and employable in many situations.

This object is solved by a wearable apparatus as defined in independent claim 1 and the use of the wearable apparatus as defined in independent claim 14. Preferred embodiments are defined by the dependent claims.

According to an exemplary aspect, a wearable apparatus for assisting a human when performing a load-involved task comprises a core unit and a modular support structure. The core unit includes a vest or belt wearable on a torso, shoulder and/or hip of the human, and at least one first interface fixed to the vest or belt. Wearing a vest or belt leaves the limbs free to move and does not impeded the person wearing the vest or belt as it would be the case when wearing an exoskeleton. Furthermore, the vest or belt can be provided in a suitable form and size without increasing manufacturing cost significantly. Additionally, the vest or belt may be adjustable in size, so that it fits the user tight but comfortably. For instance, the vest and/or belt may include soft portions that are in contact with the body of the user and can be adjusted in size. Rigid elements are provided on the soft portions and include the at least one first interface for attachment of the modular support structure.

The modular support structure can include a second interface configured to be detachably connected to the first interface. The modular support structure can further include at least one rod and at least one support module. The second interface can include at least one receiving section allowing the at least one rod to be detachably coupled to the receiving section, while the at least one support module is coupled to one of the at least one rod. This entire modular support structure can be attached and detached from the core unit via the interconnection of the first and second interfaces. This connection can be released in a fast manner and the modular support structure can be set aside if not needed. This gives the user the freedom and flexibility to employ the modular support structure whenever necessary, but avoids the time-consuming taking on and off of an exoskeleton. Wearing the vest and/or belt without the modular support structure does not hinder movement of the user.

In addition, different modular support structures for different tasks may easily be exchanged via detaching one modular support structure from the first interface and attaching another modular support structure to the first interface. Similarly, more than one modular support structure can be attached to a respective one of multiple first interfaces. This allows a user performing a particular task requiring more than one modular support structure.

The at least one rod can have any cross-sectional shape. For instance, a tubular rod or a rod with a circular, elliptical, rectangular, square, etc. cross-section or even an open cross-section may be employed. The rod may be manufactured from aluminium, fibre reinforced plastic (e.g., carbon fibre reinforced plastic - CFRP), or any other light and stiff material. The rod may also be manufactured of a flexible material or structure, such as a gooseneck fixture. This allows forming (bending) the modular support structure quickly, even after connecting it to the fist interface of the core unit.

The at least one support module can be configured to support a limb of the human and/or a tool employed for the task. Thus, instead of providing a full exoskeleton, the at least one support module may only provide a supporting structure where the user can rest an arm, a hand, a leg, the hip, the torso etc. Additionally or alternatively, the at least one support module may be formed so as to support a tool or be attachable to a tool. The modular support structure then transfers any load from the limb and/or tool via the support module and the at least one rod into the second interface, which further transfers the load into the core unit.

The modular support structure can further include a joint configured to be connected to the at least one rod and the at least one support module. Additionally or alternatively, a joint may be employed connecting the at least one rod to the second interface. In any case, the modular support structure can be brought into a position optimal for the task. Furthermore, the modular support structure can include a plurality of rods, at least two of which are interconnected by a joint. This allows that the user can arrange the modular support structure, and in particular the support module, to the optimal position for the task in a fast and secure manner.

The joint(s) may have one, two or three degrees of freedom and can be fixed in a certain position. For instance, the joint(s) may be configured to hold a certain position, for example by frictional forces of the joint members or by a fastening means fixing the joint in a certain position. The fastening means may be a screw or quick fastener provided on one joint member and pressing onto another joint member, thereby increasing friction between the two joint members to such an extent, that they do not move with respect to each other under the usual forces applied to the modular support structure.

Additionally or alternatively, the joint can be configured to be connected to two or more of the at least one rod on a same side of the joint forming a portion of a parallel linkage. Thus, the modular support structure may include two joints interconnected with two rods running parallel to each other. Each end of each rod is pivotally connected to a further member of the respective joint, so that the two rods are kept at a certain distance from each other. The parallel linkage formed by the rods and joints provides for a more stable connection, and in particular a connection of low vibration.

Also additionally or alternatively, the modular support structure can further include a slider configured to be slidably coupled with one of the at least one rod and configured to be connected to the at least one support module. The slider can include a portion that encompasses the rod or a part thereof and has means to slide on a surface of the rod. For example, the slider may have rollers or flat sliding elements of low sliding friction contacting the rod. In order to hold a certain position of the slider along the rod, fastening means can be provided, such as a screw or quick fastener pressing against the rod.

According to a different implementation, the rod may have a recess in the longitudinal direction of the rod forming a guide rail. The slider may then be inserted into the recess and slides inside the recess. Thus, the rod only requires a sliding area on one side thereof, when the remaining outer surface of the rod is not affected by a movement of the slider.

Of course, the rod may be provided with two or more sliders of any form, so that multiple elements can be attached to the rod at any position along the longitudinal extension of the rod. Such plurality of sliders may also be arranged anywhere along the circumferential surface of the rod.

Furthermore, any component of the modular support structure may be provided with a coupling element including either an opening, recess or hole or a protruding part, such as a bolt, where the opening, recess or hole is configured to receive the protruding part. The matching coupling elements, therefore, provide for coupling components of the modular support structure. For instance, a first coupling element can be mounted to or connected with a rod, joint, slider, etc. while a second coupling element may be mounted to or connected with a further rod, joint, slider, the support module or any other component of the modular support structure.

The protruding part can further be configured to be insertable into the opening, recess or hole of the coupling element in such a manner, that a rigid connection is achieved between the two coupling elements. The opening, recess or hole and the protruding part may have matching shapes that allow none, one, two or three degrees of freedom. Furthermore, the coupling element(s) may also include a fixation means to fix the coupling element(s) with respect to each other. This allows to build a variable modular support structure as desired and required for performing the task. Moreover, the modular support structure can be built from standardized elements having a common interface in the form of unitary coupling elements. Thus, depending on the task, the modular support structure can be fast rearranged, adapted or even build from scratch.

The modular support structure can optionally include a branching element or other junction element. Such branching element provides for coupling three or more components of the modular support structure to each other. For instance, while one end of the branching element is coupled to the second interface (e.g., via one or more rods), two or more ends of the branching element allow the attachment of two or more branches of the modular support structure. A first branch could be used to support a limb of the user and/or to hold a tool, while a second branch could be used as a strut bearing on a floor, wall or ceiling of the surrounding in order to support the first branch.

Thus, a modular support structure of any size, any number of branches and any desired form can be built in a quick manner. An already formed modular support structure can also easily be extended by simply attaching another branch, a further rod or other modular support structure component via a branching element.

According to a further implementation of the wearable apparatus, the second interface can include a quick fastener for detachably connecting the second interface to the first interface and/or the second interface can include a quick fastener for detachably coupling the at least one rod to the receiving section of the second interface. This allows the user to quickly release the second interface from the first interface and, hence, from the core unit.

For instance, a quick fastener for detachably connecting the second interface to the first interface may be realized by providing a protruding element at the second interface which can be inserted into the corresponding opening, recess or hole in the first interface. The protruding element is further provided with a deformable member, that can be deformed in a cross-sectional direction of the protruding element. Thereby the deformable member presses against an inner surface of the opening, recess or hole of the first interface and holds the second interface to the first interface. The deformable member may be deformed by a suitable lever arrangement. For instance, the deformable member may be an elastic element, such as a rubber element, which is pulled together by the lever arrangement thereby extending in the cross-sectional direction of the protruding element of the second interface.

Furthermore, a quick fastener for detachably coupling a rod to the receiving section of the second interface may be realized by providing the receiving section in at least two portions, which can be pulled together in the direction of the inserted rod. A locking pin may connect the at least two portions of the receiving section, thereby also running through a corresponding opening in the rod. Alternatively, instead of a locking pin, a threaded bolt may be used to connect to the at least two portions of the receiving section. Providing a nut with a quick fastener on one side, allows a fast pulling together of the two portions of the receiving section and thereby pressing onto the inserted rod to hold it within the receiving section.

Such quick fastener may be provided with any other component of the modular support structure, where a rod is attached to this component. For instance, a joint, slider, branching element, etc. can include a quick fastener for detachably coupling the rod.

According to a further implementation, the modular support structure further includes a telescopic rod having at least one end configured to be connected to the second interface, to a coupling element, and to a branching element, to the at least one rod and/or to the at least one support module. The telescopic rod may be used as a pillar between a floor, wall or other structure surrounding the user and the modular support structure.

Alternatively or additionally, a telescopic rod may be used to form a frame element with respect to the remaining components of the modular support structure. For instance, the telescopic rod can interconnect the second interface with a rod or the support module, can connect two rods to each other (via a coupling element, branching element, joint, slider or other element attached to a rod), or can connect a rod to a support module. Due to the telescopic property, the telescopic rod allows movements of the remaining components of the modular support structure but provides additional strength of the modular support structure. Furthermore, the telescopic rod may include a hydraulic cylinder or spring, in order to provide a certain resistance during its telescopic movement. The telescopic rod can also have a fastening means to fix the telescopic rod at a certain stroke.

Also additionally or alternatively, the at least one support module may be an armrest, a snake arm, a tool holder or a stand base. Depending on the task and purpose the support module may support a limb of the user, a tool operated by the user, the weight of the user by supporting the core unit or may also support the modular support structure (e.g., by forming a stand base at a branch of the modular support structure).

According to a further implementation, the modular support structure may further include soft modules, such as cushions, made of fabrics. The soft modules may be employed at contacting areas between the modular support structure and the user, such as in an arm rest, a leg rest or a support for the torso of the user. It is to be understood that soft modules may also be used to support a workpiece or a tool or to contact a surrounding (e.g., a floor, ceiling, wall, etc.). This reduces vibrations introduced into the modular support structure and, hence, protects the user. It also protects the workpiece, tool or surrounding from any damages caused by the modular support structure. The soft modules may be active, e.g., inflatable by a pump or self-inflating, or passive, such as foam-based cushions. In case of multiple inflatable soft modules, a workpiece can be brought into a desired position by correspondingly inflating the respective cushion(s).

The wearable apparatus can further comprise an active unit. An active unit is an actuating unit provided with energy (besides muscular strength of the user) to support any movement of the components of the modular support structure. Thus, the active unit may including an actuator configured for providing a force to the at least one rod and/or the at least one support module supporting a movement of the modular support structure. The active unit may react on a movement of the components of the modular support structure, for example, when a user (re-)adjusts the posture of the modular support structure. Thus, lifting a workpiece or tool or even moving a limb of the user may be supported by the active unit. The actuator can be a motor with a spindle, a hydraulic actuator, a pneumatic actuator, a spring or the like that can extend or contract.

In addition or alternatively, the active unit may also be a control unit, an energy supply, and/or a sensor configured for sensing a load or stress provided on a portion of the modular support structure. A control unit may be employed to control an actuator event supporting a movement of the modular support structure. This controlling may be based on a sensor signal from the sensor. The sensor signal may be received from a sensor of the same active unit, e.g., monitoring an actuator of the active unit, or may be from a sensor of another active unit. In the latter case, a sensor can be arranged in a glove-like active unit measuring the force applied by the user to operate a tool or handle a workpiece, which provides an indication of the weight of the tool or workpiece. Another active unit can then control an actuator supporting or lifting the tool or workpiece based on the measured force (sensor signal), e.g., exerting a force on the modular support structure depending on the weight derived from the measured force (sensor signal).

Furthermore, the sensor signal may also be used to generate a warning if the modular support structure is overloaded or if the load transferred from the second to the first interface may exceed a certain threshold. The threshold may be chosen based on security reasons for the user (to avoid unhealthy loads) and/or based on material properties of the wearable apparatus.

According to a further implementation, the wearable apparatus can further comprise at least one inflatable cushion and a pump configured for inflating the at least one inflatable cushion. The at least one inflatable cushion may be provided at the wearable apparatus to protect a body portion of the user. For instance, an elbow, a knee, the hip, etc. of the user may be protected by a correspondingly arranged inflatable cushion. The cushion can be inflated by operating the pump and can be deflated either by operating the pump in an opposite direction or by operating a valve. The wearable apparatus may further include a sensor detecting an approach of a body part of the user to another element, such as a floor, wall, workpiece etc. Based on such detected approach, the inflatable cushion is inflated. For example, a user kneeling down can automatically be provided with protecting cushion(s) around the knee(s) and/or tibia(s). The inflating/deflating of the inflatable cushions may also be based on a sensor signal provided from a sensor detecting the state of the modular support structure.

More than one modular support structure can be coupled to the core unit. For example, the core unit can include a plurality of first interfaces. This allows connecting a plurality of modular support structures to the respective plurality of the first interfaces. Furthermore, the user may also remove a modular support structure from one first interface and couple it to another first interface, such as changing the modular support structure from the right side to the left side of the torso.

Additionally or alternatively, the core unit can further include at least one rigid element, wherein the at least one first interface is fastened to one of the at least one rigid element. The rigid element(s) provide for a required stiffness of the core unit and distribution of the forces introduced by the modular support structure (via the first interface). The core unit may further include soft elements contacting the body of the user, so that wearing the vest and/or belt is comfortable.

Furthermore, the at least one rigid element can be connected to the vest in an area of the chest, shoulder, upper back, lower back and/or waist of the user when wearing the vest and/or wherein the at least one rigid element is connected to the belt in an area of the hip, waist, lumbus (loin), and/or lower back of the user when wearing the belt. The rigid element(s) can be provided at a portion of the vest or belt, where it does not interfere with the motion of the user. For example, providing the rigid element(s) and, hence the first interface(s) at a portion of the back of the user, the user's chest area is free for handling a tool or workpiece and the user can better move. On the other hand, if a body part of the user is to be supported against a floor or wall, the rigid element is better arranged at the front of the user (of the vest or belt). Thus, the vest and/or belt can be provided with attachment means allowing an attachment of one or more rigid elements at the desired/required part of the vest and/or belt. This provides for a quick reassembling of the core unit for a respective task. It is to be understood that different vests or belts may be provided for the respective purpose, where the rigid parts are arranged in corresponding areas.

In accordance with a further aspect, the wearable apparatus is used when performing a task during manufacturing or maintenance of an aircraft. For example, one or two arms of the user operating above the shoulders or head can be supported by using the wearable apparatus. Additionally or alternatively, the user can be supported by holding a tool by using the wearable apparatus and connecting the tool to a support module.

Further sites of operation, where the wearable apparatus can be used, may be manufacturing or maintenance of automobiles and other machinery, spacecraft operations on ground or in space, construction sites (e.g., during brick laying) and in the healthcare sector (e.g., nursing staff handling patients and/or devices).

The above described aspects and implementations of the wearable apparatus and its use are not restricted to the described forms, but can be interchanged, added or otherwise combined. Furthermore, the components and elements constituting the modular support system described above may be used in any possible combination and number, so that any modular support structure required for a task can be easily formed. The first and second interface provide for exchangeable modular support structure(s), while the coupling elements and attachment points of the respective modular support structure components/elements provide for assembling any desired form.

The wearable apparatus and its use reduces the setup time of the modular support structure for different tasks, reduces recurring costs due to reutilization of the modular support structure by different users, improve the working ergonomics due to relief of the strain from the users, and also increases productivity and resulting quality due to a more steady operation with large and heavy workpieces and tools.

Examples of the wearable apparatus and its core unit and modular support structure are described in greater detail with reference to the attached schematic drawings in the following, wherein
- Figure 1: shows schematically variants of a core unit of a wearable apparatus,
- Figure 2: shows schematically variants of a first interface,
- Figure 3: shows schematically variants of a modular support structure,
- Figure 4: shows schematically variants of a second interface,
- Figure 5: shows schematically variants of a joint,
- Figure 6: shows schematically variants of a slider,
- Figure 7: shows schematically variants of a quick fastener,
- Figure 8: shows schematically different support modules,
- Figure 9: illustrates schematically the use of a wearable apparatus, and
- Figure 10: illustrates schematically exemplary combinations of a core unit with various modular support structures.

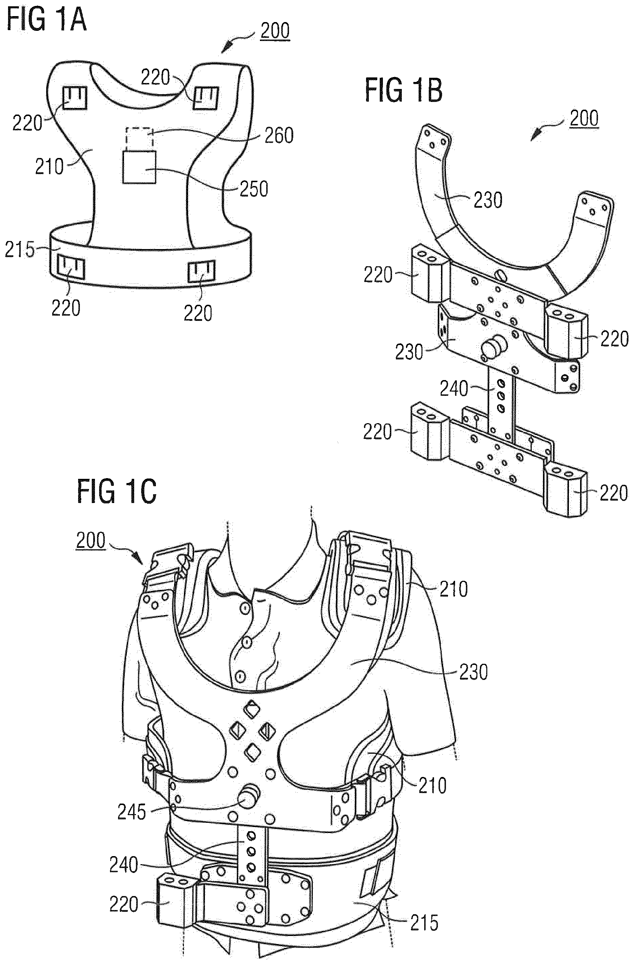

Fig. 1 shows schematically variants of the core unit 200 of a wearable apparatus 100. In particular, Fig. 1A illustrates a core unit 200 of a wearable apparatus 100, Fig. 1B illustrates details of the core unit 200, and Fig. 1C illustrates an example of the core unit 200.

With respect to Fig. 1A the core unit 200 may include a vest 210 wearable on a torso, for example over the shoulders of a human (i.e., a user of the wearable apparatus 100). In addition or alternatively, the core unit 200 may include a belt 215 wearable on a hip of the human (user). The vest 210 and the belt 215 may be configurable with respect to a size of the user. For example, straps and latches may be used to shorten or widen certain parts of the vest 210 and/or belt 215, in order to adjust the size of the vest 210 and belt 215 for a comfortable fitting of the core unit 200. The vest 210 and/or belt 215 comprise(s) padded portions of a soft material, which is in contact with the body of the user.

The core unit 200 includes at least one first interface 220, which is fixed to the vest 210 and/or belt 215. The at least one first interface 220 is capable of receiving further components of the wearable apparatus 100, in order to connect those further components in a rigid manner to the core unit 200 as will be outlined in more detail further below.

Furthermore, the wearable apparatus 100 may optionally comprise a control unit 250 and energy supply 260, which can be attached to the vest 210 and/or belt 215. The energy supply 260 provides energy (e.g., electrical energy) to the control unit 250 and/or further components of the wearable apparatus 100. In addition or alternatively, the energy supply 260 can be a gas cylinder providing a compressed gas for controlling pneumatic and/or hydraulic actuators or inflatable units.

In an example, the core unit 200 may comprise soft parts that are worn by the user, i.e., that are in contact with the user. The soft parts may be the vest 215 and/or belt 215. In order to provide the required stiffness for the wearable apparatus 100, the core unit 200 further includes one or more rigid elements 230 illustrated in Fig. 1B in more detail. The rigid element(s) 230 may be connected to the soft parts, such as the vest 210 and/or belt 215, in a load and force transferring manner. For instance, the rigid element 230 may be attached to the vest 210 and/or belt 215 by an adhesive and/or by sewing the rigid element 230 to the vest 210 and/or belt 215. Optionally, the rigid element 230 may include an adjustable element 240. The adjustable element 240 may be configured to be moved with respect to another portion of the rigid element 230 and be affixed to the other portion of the rigid element 230 at a desired position. This allows adjusting a size of the core unit 200, so that it suitably fits the user. In addition, the adjusting may also allow moving one or more of the first interfaces 220 with an adjustable element, so that the first interface(s) 220 is/are positionable optimally for the task to be performed. It is to be understood that the adjustable element 240 is also made of a rigid material, such as the same material of the rigid element(s) 230. The material used for the rigid element(s) 230 and/or adjustable element 240 can be metal, e.g., aluminium, fiber reinforced plastic (FRP), or carbon fiber reinforced plastic (CFRP).

Fig. 1C illustrates an example of the core unit 200 including a vest 210 and belt 215. The exemplary core unit 200 of Fig. 1C includes only one first interface 220. Nevertheless, multiple first interfaces 220 may be provided with the core unit 200, as illustrated, e.g., in Fig. 1B. Furthermore, since the core unit 200 illustrated in Fig. 1C includes both, a vest 210 and belt 215, the rigid element(s) 230 further include(s) an adjustable element 240. The adjustable element 240 allows to adjust the height of the core unit 200 to the size of the user. In particular, a distance between the belt 215 and a shoulder part of the vest 210 can be adjusted to the height of the torso of the user by moving the adjustable element 240 with respect to the rigid element(s) 230, here the upper part of the core unit 200. By affixing the adjustable element 240 to the rigid element(s) 230 by a fastening means 245, the core unit 200 may comfortably fit the user.

Fig. 1C illustrates the rigid element(s) 230 on a chest part and a waist part of the core unit 200. It is to be understood that the rigid elements 230 or only one rigid element 230 is provided at the core unit 200 at any desired position. For instance, one or more rigid elements 230 can be arranged in an area of the chest, shoulder, upper back, lower back and/or waist of the user when wearing the core unit 200, i.e., the vest 210. In addition or alternatively, one or more rigid elements 230 can be connected to the belt 215 in an area of the hip, waist, lumbus (loins), and/or lower back of the user when wearing the belt 215.

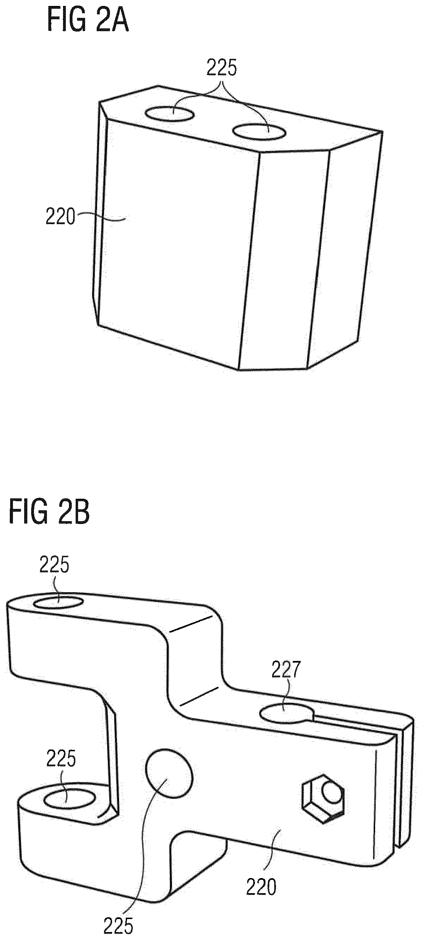

Fig. 2A illustrates schematically a variant of a first interface 220. The remaining parts of the core unit 200 are omitted in this drawing. It is to be understood that the first interface 220 is attached somewhere to the vest 210, belt 215, rigid element 230 or adjustable element 240. The first interface 220 includes at least one opening, recess or hole 225. This opening 225 is formed and dimensioned to sufficiently transfer loads from a component (not shown) inserted into the opening 225. According to the illustrated variant, the opening, recess or hole 225 is provided on an upper surface, so that any component inserted therein can hang at the first interface 220. This allows for fast and easy attachment of such component to the first interface 220 and, hence, to the core unit 200 utilizing gravity.

A further variant of a first interface 220 is schematically illustrated in Fig. 2B. Here the opening, recess or hole 225 is provided at a fork-shaped portion of the first interface 220. Thus, another component (not shown) can be inserted into the fork-shaped portion and be connected to the first interface 220 by inserting a bolt through the openings 225 at both ends of the fork-shaped portion (and through the other component). Alternatively, the other component may be provided with extendable bolts which can be inserted into the openings 225 from an inner side of the fork-shaped portion. A further option for attaching another component is an opening 225 that extends horizontally when the first interface 220 is mounted to the vest 210 or belt 215. Thus, the other component may simply be stuck into the horizontal opening 225 (illustrated in Fig. 2B on a front surface of the first interface 220).

The first interface 220 may further include at least one connecting point 227 for mounting the first interface 220 to the vest 210 or belt 215, such as to the rigid element(s) 230 and/or adjustable element 240.

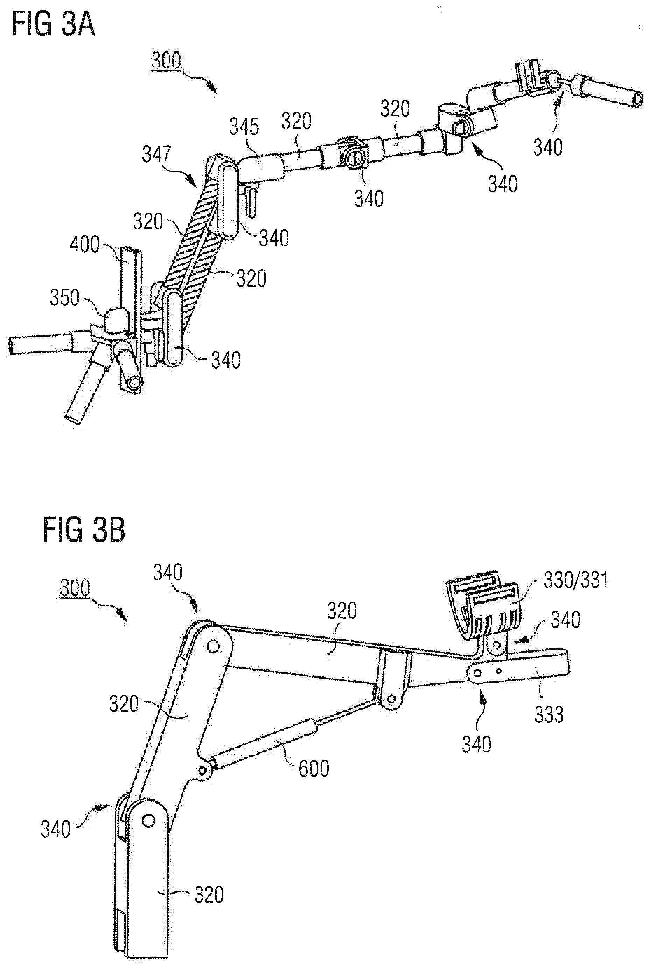

Fig. 3A illustrates an exemplary modular support structure 300. The modular support structure 300 can include a plurality of components, such as one or more rods 320, one or more joints 340, one or more coupling elements 345, one or more branching elements 350, one or more sliders 400, etc. The rods 320 and joints 340 can be configured to form a parallel linkage 347 as part of the modular support structure 300. As is illustrated in Figs. 3A, the modular support structure 300 can be formed of tubular rods 320 having the same cross-sectional size, so that they can be interchanged with each other and be attached to any of the illustrated connecting components 340, 345, 400. The length of the rods 320 can be derived depending on the form required for the task to be performed.

Fig. 3B shows an exemplary further variant of a modular support structure 300. Here, the rods 320 are formed by two parallel plate-shaped elements that can be pivotally connected to another rod 320. For this connection, the distance between the plate-shaped elements of one rod 320 is chosen, so that the rod 320 fits in between the plate-shaped elements of another rod 320. By connecting two rods 320 with a bolt, a joint can be achieved to pivotally couple two rods 320 with each other. To form a modular support structure 300 of a plurality of rods 320, rods 320 having two different distances between the plate-shaped elements are enough, since they always fit into each other.

In addition, the modular support structure 300 can further include a telescopic rod 600 interconnecting one rod 320 with another rod 320 or joint 340. Furthermore, attached at an end of the modular support structure 300 is at least one support module 330. The support modules 330 illustrated in Figs. 3B have the form of an armrest 331 and a tool holder 333. Thus, the user can use the modular support structure 300 to support the weight of the tool (not shown) as well as the weight of the arm operating the tool. At the lower end of the modular support structure 300 in Fig. 3B, the modular support structure 300 is connected to a core unit 200 (Figs. 1A-1C) via a first and second interface (not shown in Fig. 3B).

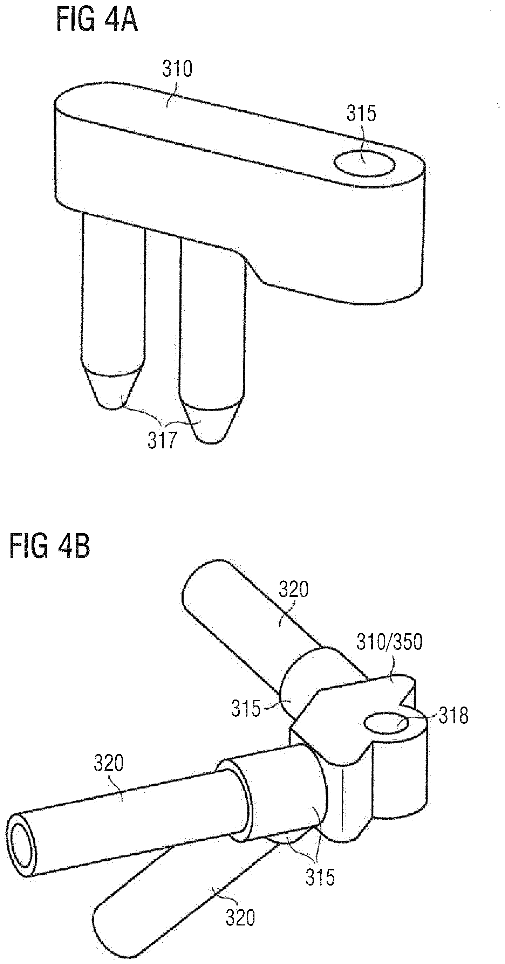

Further details of the individual components of the modular support structure are now described with respect to Figs. 4 to 7. In particular, Fig. 4A illustrates schematically an exemplary second interface 310. The second interface 310 may include one or more protruding elements 317, which are configured and dimensioned to fit into the corresponding openings 225 of a first interface 220, such as the one illustrated in Fig. 2A. Furthermore, the protruding elements 317 extend from a surface of the second interface 310 which contacts a corresponding surface of the first interface 220. Thereby, a rigid, but detachable, connection between the first and second interface 220, 310 can be achieved.

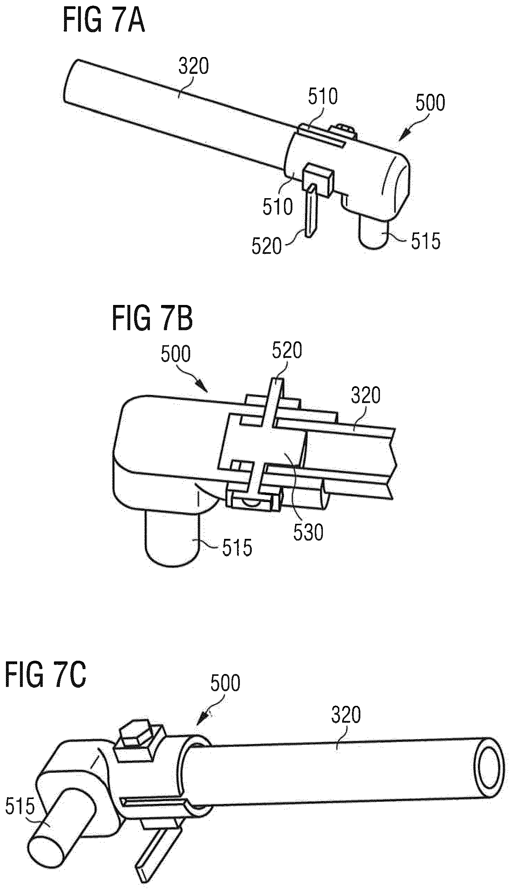

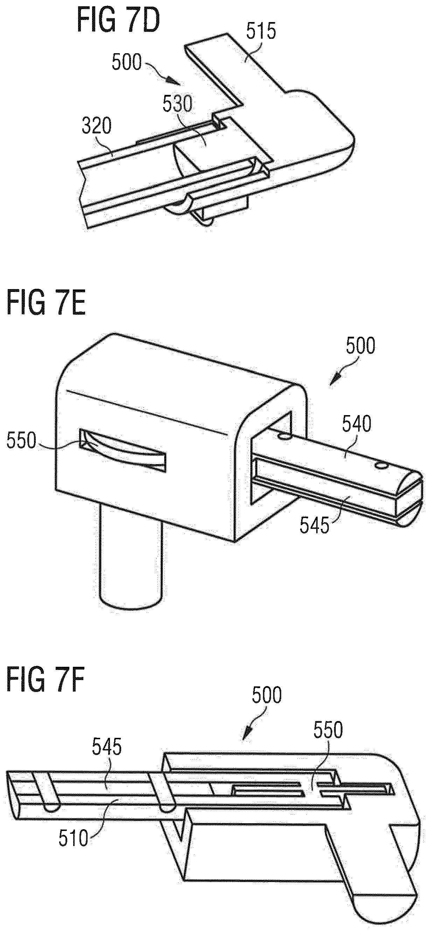

The second interface 310 further includes a receiving section 315 configured to receive a rod 320. The rod 320 may simply be inserted into the receiving section 315. In addition, the second interface 310 may include fastening means (not shown) to affix the rod 320 to the receiving section 315. Examples of fastening means will be described with respect to Fig. 7 below.

A further exemplary second interface 310 is illustrated in Fig. 4B. This second interface 310 is suitable to be inserted into the fork-shaped portion of the first interface 220 as shown in Fig. 2B. When aligning the openings 225 of the first interface 220 with the opening 318 of the second interface 310, a bolt or other tubular element can be inserted into openings 225 and 318, thereby affixing the second interface 310 to the first interface 220. The second interface 310 may have one degree of freedom, i.e. circulating around opening 318 or the bolt inserted therein, by gliding on an inner surface of the fork-shaped portion of the first interface 220. Alternatively, a fastening means (not shown) may be used to completely fix the second interface 310 to the first interface 220.

The second interface 310 shown in Fig. 4B further includes three receiving sections 315, into which respective rods 320 can be inserted. It is to be understood, that the second interface 310 may have any number of receiving sections 315 and is not limited to the illustrated three receiving sections 315. Furthermore, the user does not need to attach a rod 320 to each receiving section 315, but only into this/these receiving section(s) 315, where (a) modular support structure(s) 300 should start.

The component illustrated in Fig. 4B may also be used as a branching element 350, instead of the second interface 310. In order to forming a branching element 350 it is configured to be coupled with a plurality of rods 320. The hole 318 may then be used to couple another rod 320 to a branching element 350 as will be outlined in more detail further below with respect to Figs. 7A to 7F. Furthermore, the receiving sections 315 of the branching element 350 can be arranged with respect to each other at any required angle. The branching element 350 is not restricted to the angles illustrated in Fig. 4B. In addition, the receiving sections 315 may further be configured to be moved, at least to a certain degree. This allows amending the angle of the attached rods 320 even when the modular support structure 300 is already formed. For example, each receiving section 315 may include a ball joint with or without a fixation to hold the receiving section(s) 315 at a certain position.

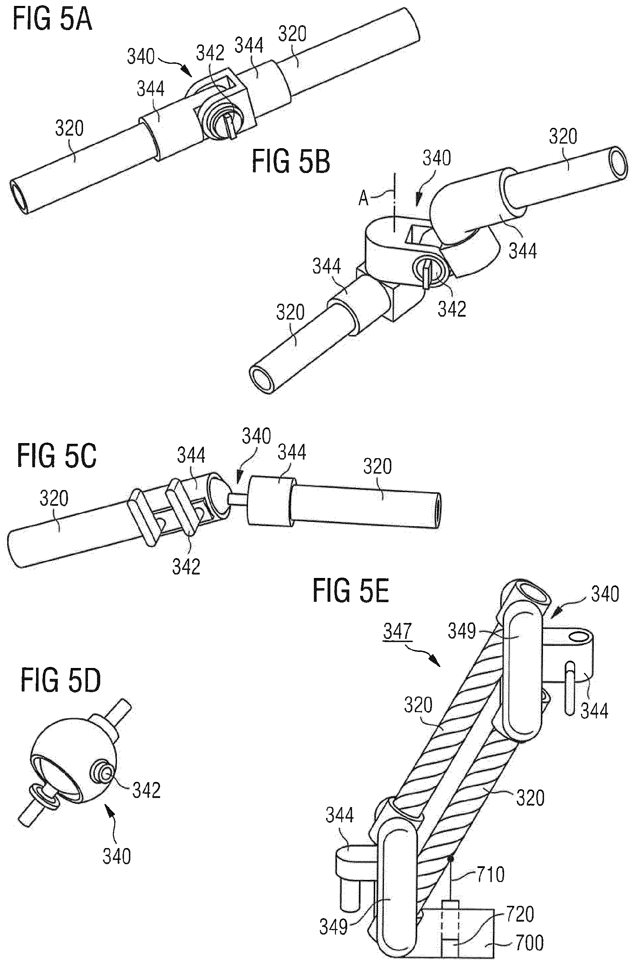

Turning now to Figs. 5A to 5E, various examples of joints 340 are illustrated. Each of the joints 340 of Figs. 5A to 5C is depicted as being connected to a rod 320 on each of two ends of the joint 340. It is to be understood that a joint 340 may also be directly connected to a second interface 310, a branching element 350 and/or a support module 330 at at least one of its ends. On the other hand, a very short rod 320 can be used between a joint 340 and a second interface 310 and/or support module 330. This allows a unitary connection between all the components 310, 330, 340, 350 of the modular support structure 300 independent of the distance required between the components 310, 330, 340, 350.

The joint 340 illustrated in Fig. 5A provides receiving sections 344 on both ends of the joint 340 into which a respective rod 320 can be inserted. Furthermore, the illustrated joint 340 provides one degree of freedom, i.e., around one axis. In addition, optional fastening means 342 may be provided. This fastening means 342 provides for affixing the joint 340 in a certain position, so that the connected rods 320 may be affixed at a certain angle to each other.

The joint 340 illustrated in Fig. 5B provides a second degree of freedom. A first degree of freedom is around the axis including the fastening means 342 (as with the joint 340 of Fig. 5A), while the second degree of freedom is around axis "A". A joint 340 having three degrees of freedom in the form of a ball joint 340 is illustrated in Figs. 5C and 5D. Both joints 340 (having two or three degrees of freedom) may also include fastening means 342 affixing the joint 340 in a certain position. For instance, a screw may press onto the ball joint 340, thereby affixing the ball joint 340.

Furthermore, a parallel linkage 347 may be formed by multiple rods 320 and corresponding joint structures 340 as shown in Fig. 5E. A joint structure 340 is connected to the multiple rods 320 on the same side of the joint structure 340 and at a certain distance. Both rods 320 are pivotally connected to a distance holder 349, thereby forming the parallel linkage 347.

Attached to the distance holder 349 is a receiving section 344 or coupling component, which will be described in more detail with respect to Fig. 7. As will also be outlined further below with respect to Fig. 7, the receiving sections 344 may provide fastening means to prevent the rod 320 from disengaging the receiving sections 344.

Optionally, a joint 340 may be provided with an active unit 700. Fig. 5E exemplarily illustrates an active unit 700, which protrudes from a joint 340, e.g., from the distance holder 349. The active unit 700 includes an actuator 710 that may be coupled to a rod 320 connected to the joint 340. By exerting a force from the actuator 710 onto the rod 320, the active unit 700 may move the rod 320 with respect to the joint 340. In case another rod 320 extending from another end of the joint 340, the two rods 320, which are connected by the joint 340, can be moved with respect to each other. Such movement can also be initiated by a user manually, while an actuation of the actuator 710 facilitates the user's movement.

It is to be understood that the active unit 700 and, hence, the actuator 710 can be provided at any other component of the modular support structure 300. For example, the active unit may move or facilitate a movement of a rod 320 relative to the second interface 310, a movement of a rod 320 or joint 340 relative to the support module 330 and/or a movement of a rod 320 relative to another rod. Furthermore, an active unit 700 may also be configured to change the length of a rod 320. For instance, the rod 320 may comprise at least two elements in a longitudinal direction that can move relative to each other in the longitudinal direction by the active unit 700.

A further optional element of the active unit 700 is a sensor 720 configured for sensing or detecting stress provided on a portion of the modular support structure 300. In case the user moves parts of the modular support structure 300, such as the rods 320 connected by the joint 340, the sensor 720 detects a force applied onto the actuator 710. Based on a signal from the sensor 720, the actuator 710 can facilitate the user's movement on the modular support structure 300. Thus, especially if a load is to be lifted with the modular support structure 300, the power required by the user is less due to the assisting power of the actuator 710. Moreover, the signal of the sensor 720 may also be interpreted as an external force acting on the modular support structure 300. Depending on the magnitude of the sensed force, a warning may be output, in order to protect the modular support structure 300 and/or the user. The sensor 720 may be connected to the control unit 250 (see Fig. 1A), which also controls the actuator 710 and/or outputs the warning. A user may also set a mode of the control unit, whether the sensor signal should be used for controlling the actuator or outputting a warning.

It is to be understood that the sensor 720 can be arranged remote of the active unit 700 or at/in another active unit 700. The sensor 720 can measure a movement of the user, so that the control unit 250 is capable of supporting the user by moving or fixing the modular support structure 300 depending on the sensor's 720 signal. As an example only, the sensor 720 can be arranged in a glove-like active unit measuring the force applied by the user to operate a tool or handle a workpiece. The control unit 250 can derive an indication of the weight of the tool or workpiece. One or more active units 700 can then control a respective actuator 710 to support or lift the tool or workpiece based on the derived weight. The active unit(s) 700 can, for example, exert a force on the modular support structure (rod 320, joint 340, slider 400, etc.) depending on the weight derived from the measured force (signal of the sensor 720).

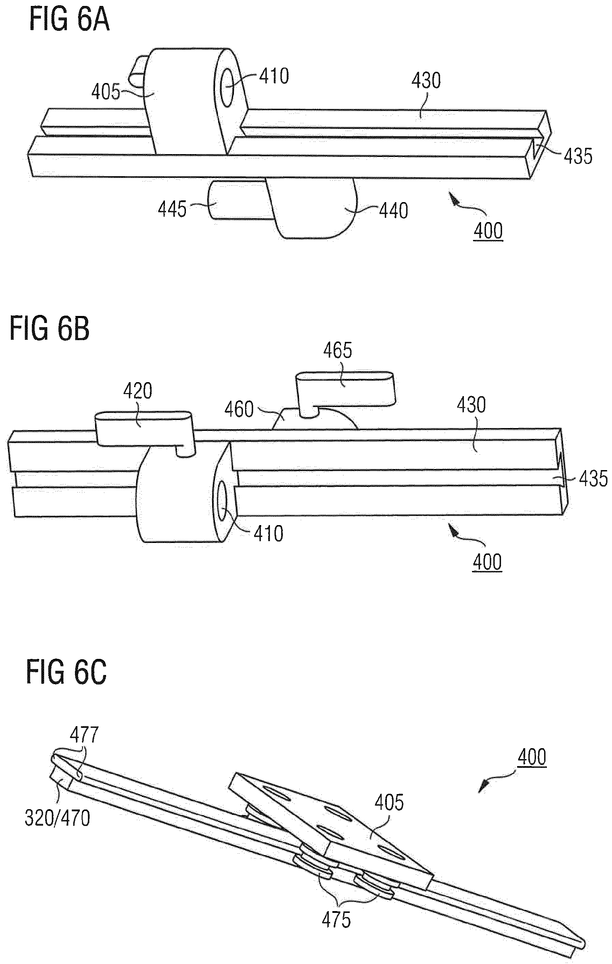

Another coupling element of the modular support structure 300 besides joints 340 is a slider 400 illustrated schematically in Figs. 6A to 6C. The slider 400, as shown from two different angles in Figs. 6A and 6B, includes a sliding element 405, which is configured to slide along the longitudinal axis. For instance, the sliding element 405 is coupled to a longitudinal element 430, along which the sliding element 405 slides. The coupling is achieved by providing a recess 435 in the longitudinal element 430 into which a portion of the sliding element 405 can engage. The recess 435 may widen into the longitudinal element 430, i.e., the opening of the recess 435 at an outer surface of the longitudinal element 430 is smaller in size than a bottom of the recess as best seen in Fig. 6A. The sliding element 405 may have a corresponding protruding portion of a matching cross-sectional shape, i.e., a portion that widens in cross-section with increasing distance from the sliding element 405. This portion of the sliding element 405 can be inserted into the recess at a side face of the longitudinal element 430. Thus, the sliding element 405 is coupled to the longitudinal element 430 and can slide along the longitudinal element 430 when the protruding portion is in engagement with the recess 435.

Furthermore, a fixation 420 can be provided at the slider 400, such as at the sliding element 405. The fixation 420 may pull the protruding portion of the sliding element 405 towards the main body of the sliding element 405, thereby pressing the protruding portion to the inner surfaces of the recess 435. This allows a fixation of the sliding element 405 with respect to the longitudinal element 430.

The slider 400, and in particular the sliding element 405, may further include a hole 410 configured to receive a bolt (not shown), for example a bolt attached to a rod 320 or a support module 330. Similarly, a coupling element 440 may be provided on an opposite side of the longitudinal element 430. The coupling element 440 can be provided with a bolt 445 onto which a corresponding coupling element (not shown) can be put and optionally fastened to bolt 445.

A further optional implementation includes a further sliding element 460 provided on the longitudinal element 430. For example, the further sliding element 460 can be arranged on a side of the longitudinal element 430 opposite to the sliding element 405. The further sliding element 460 may be attached to the longitudinal element 430 by a further recess (not shown) in longitudinal element 430 in the same manner as sliding element 405. It is understood that the further sliding element 460 may be attached to the longitudinal element in a different manner.

A different manner of attaching a sliding element 405 to a longitudinal element is illustrated exemplarily in Fig. 6C. For example, longitudinal element 470 may not be provided with a recess, but with one or more protruding portions 477. The sliding element 405 includes rollers 475 with a circumferential surface matching the protruding portions 477. This allows the rollers 475 to engage with the protruding portions 477, preferably on two opposite sides of the longitudinal element 470. This arrangement prevents the rollers 475 from disengaging of the longitudinal element 470.

Alternatively, the longitudinal element 470 may not have the protruding portions 477. Actually, the longitudinal element 470 can be a rod 320 without any modifications. The sliding element 405 and/or the rollers 475 can then have a form that encompasses the rod 320. Having two or more rollers 475 on opposite sides of the rod 320, the sliding element 405 is capable of sliding along the longitudinal direction of the rod 320. Optionally, if the rod 320 has a circular cross-section, the sliding element 405 can also slide around the circumference of the rod 320, so that it has two degrees of sliding freedom.

As indicated briefly above, the modular support structure 300 may be built from a variety of different components and elements between the second interface 310 and at least one support module 330. In order to attach and detach the various components and elements, coupling elements 500 can be provided. For example, as illustrated in Figs. 7A to 7D, a coupling element 500 can be attached to one end of a rod 320. Figs. 7A and 7C schematically illustrate a rod 320 inserted into a receiving section 510 of coupling element 500. The receiving section 510 may include two portions that can be pressed together by a fastening means 520 (e.g., a bolt and nut and optionally a quick fastener). As can be derived from sectional views shown in Figs. 7B and 7D, the coupling element 500 may include an interior element 530 that is formed to fit inside the rod 320. Thus, a stable connection between coupling element 500 and rod 320 can be achieved and a stable and rigid fixation of the rod 320 with the coupling element 500 can be achieved by a fastening means 520 pressing the portions of the receiving section 510 to an outer circumference of the rod 320.

The coupling element 500 may further include a protruding portion 515, for example, a bolt-shaped protruding portion 515. This protruding portion 515 can be inserted into a hole of a different coupling element, such as the second interface 310 or branching element 350 shown in Fig. 4B (see in particular hole 318), receiving section 344 shown in Fig. 5E or sliding element 405 shown in Fig. 6A (see in particular hole 410). Alternatively, the coupling element 500 may include a hole, such as the hole 318 illustrated in the second interface 310 or branching element 350 (Fig. 4B), illustrated in the receiving section 344 (Fig. 5E) or hole 410 of sliding element 405 (Fig. 6A). This allows coupling of two rods 320 with each other or coupling a rod 320 with a second interface 310, a joint 344, branching element 350 or slider 400, in order to build the modular support structure 300.

A different way of fixation of the coupling element 500 to a rod 320 or to a component with a hole is illustrated in Figs. 7E and 7F. This coupling element 500 provides a protruding portion 540 consisting of three parts. In detail the protruding portion comprises an elastic member 545that is disposed between two rigid protruding parts. A rod 320 can be put over protruding portion 540. Then the elastic member 545 can be deformed by operating fastening means 550. For example, fastening means 550 may be a turnable wheel that deforms elastic element 545 by pushing an eccentric part of the wheel 550 onto elastic element 545. Alternatively, the turnable wheel 550 may pull the distal end of elastic member 545 towards the main body of the coupling element 500. In any case, the elastic member 545 is pulled together in the longitudinal direction of the protruding element 540 and is squeezed out of the two parts of protruding portion 540, i.e., in a direction perpendicular to the longitudinal direction of the protruding element 540. The deformed elastic member 545 then presses onto the inner surface of the rod 320 (not shown in Figs. 7E and 7F) in order to fix rod 320 to the coupling element 500.

In an alternative implementation, the deformation of the elastic member 545 may be achieved by a lever arrangement (not shown) pulling elastic member 545 in the same manner as described above.

The mechanism described above with respect to Figs. 7E and 7F can also be employed to detachably connect the second interface 310 to the first interface 220. For instance, the protruding portions 317 (Fig. 4A) of the second interface 310 may include deformable elastic members, such as elastic members 545 illustrated in Figs. 7E and 7F.

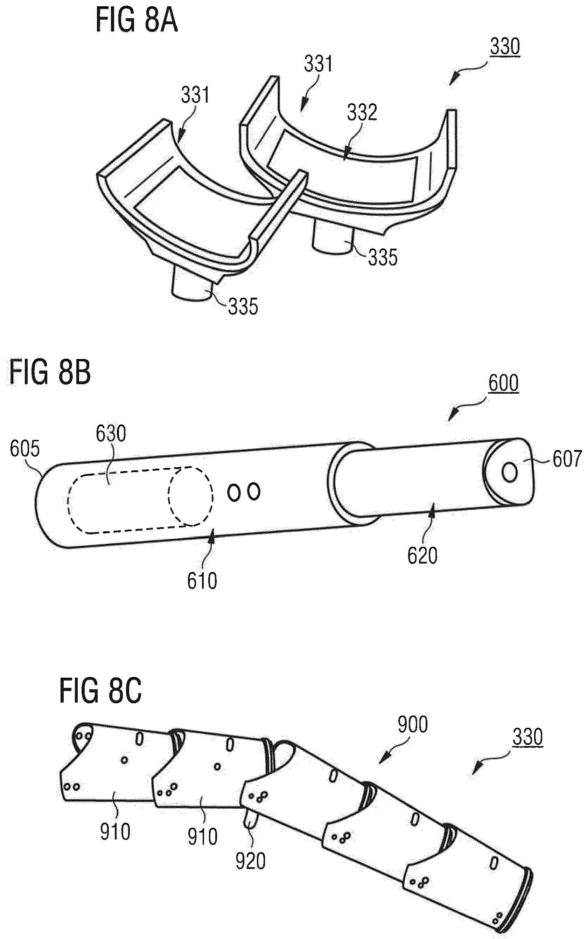

Furthermore, the modular support structure 300 may include a support module 330 configured to support a limb of the user and/or a tool employed for the task. As an example, Fig. 8A illustrates an armrest 331 forming a support module 330 supporting a limb of the user. The armrest 331 may include a cushion 332 for a more comfortable support of the arm of the user. Armrest 331 may further include a bolt 335 with which the armrest 331 can be connected to a coupling element 500, a sliding element 405 and/or a receiving section 344. The bolt 335 may be formed in the manner as described for bolt 515 shown in Figs. 7A to 7D or as protruding element 540 shown in Figs. 7E and 7F, the latter of which allows a fixation of bolt 335 in a hole of the corresponding element to which it is coupled.

Another component forming part of the modular support structure 300 can be a telescopic rod 600 depicted in Fig. 8B. The telescopic rod 600 may have a first end 605 that is configured to be connected to the second interface 310, to a rod 320 and/or to the support module 330. Although not illustrated in Fig. 8B, telescopic rod 600 may have the coupling element 500 at its first end 605 to be detachably connected to another part of the modular support structure 300. Similarly, the telescopic rod 600 may have a second end 607 that is connectable to a different rod 320 and/or support module 330. Also the second end 607 may include a coupling element 500.

The telescopic rod 600 has at least two parts 610 and 620 that can be moved with respect to each other in a longitudinal direction thereof. Thus, the entire length of telescopic rod 600 can be adjusted, so that the parts of the modular support structure coupled to the ends 605 and 607 can be brought into a desired position. Furthermore, the telescopic rod 600 may include an internal element 630. Internal element 630 can be a hydraulic cylinder or spring, in order to provide a certain resistance during the telescopic movement of telescopic rod 600. Internal element 630 can also be an active element and provides a force pushing parts 610 and 620 apart or pulling them together. An active internal element 630 may be a hydraulic component, a motor with a spindle or the like that can extend or contract the telescopic rod 600. The active internal element 630 may receive energy from energy supply 260 and maybe controlled by control unit 250 (both Fig. 1A).

Another optional component of modular support structure 300 is illustrated in Fig. 8C in the form of a snake arm 900. Snake arm 900 includes at least two link elements 910 that are pivotally attached to each other. Each link element 910 may have a tubular form dimensioned to be put over the arm or leg of the user. At least one of the link elements 910 may include a bolt 920, which is configured to be inserted into a hole of a coupling element or other part of the modular support structure. The bolt 920 may be formed in the manner as described for bolt 515 shown in Figs. 7A to 7D or as protruding element 540 shown in Figs. 7E and 7F.

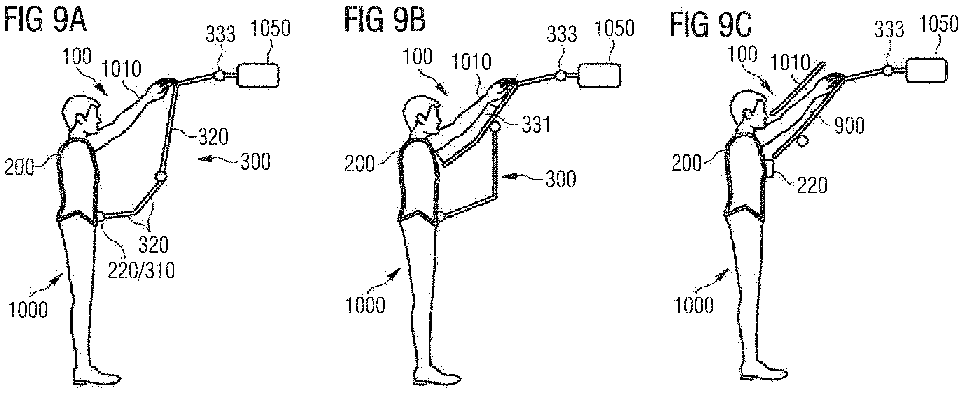

Various ways of how to use the wearable apparatus 100 are schematically illustrated in Figs. 9A to 9E. For instance, as shown in Fig. 9A, the wearable apparatus 100 may be worn by a user 1000, in particular the core unit 200 is worn by the user 1000. Attached to the core unit 200 is a modular support structure 300 comprising a plurality of rods 320 connected to each other, e.g. by coupling elements 500. One end of the modular support structure 300 is connected to the core unit 200 via first and second interfaces 220 and 310. An opposite (distal) end of the modular support structure 300 includes a tool holder 333 to which a tool 1050 is affixed. The user 1000 only needs to grap and control the tool 1050 with an arm 1010 (and hand). The weight of the tool 1050 is transferred by the modular support structure 300 into the core unit 200 and, hence, onto the shoulders and/or hips of the user 1000.

According to a use variant illustrated in Fig. 9B, the modular support structure 300 additionally includes an armrest 331. This allows the user 1000 to control the tool 1050 with an arm 1010 (hand), while at the same time allows to rest the arm 1010 on armrest 331. This further reduces strains for the user 1000, in particular if the user 1000 has to operate the tool 1050 above the shoulders or the head of the user 1000.

An alternative to the use variant shown in Fig. 9B is illustrated in Fig. 9C. Here, the user 1000 has an arm 1010 in a snake arm 900. The snake arm 900 can be attached to the first interface 220 provided on core unit 200 without the use of any rod 320. Thus, the modular support structure 300 includes only the snake arm 900 and a tool holder 333, to which tool 1050 is attached. The snake arm may include a second interface 310 for coupling it to the first interface 220 of the core unit 200.

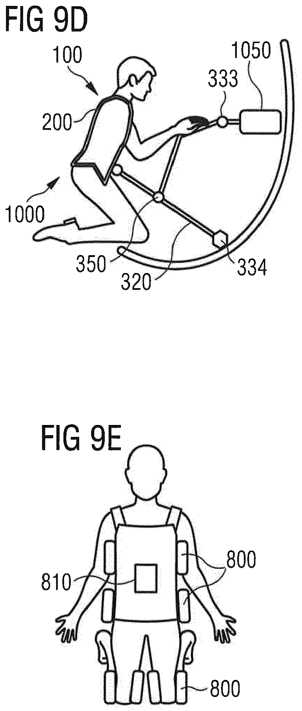

A further variant of the modular support structure 300 is shown in Fig. 9D. Here, the modular support structure 300 includes a branching element 350, so that modular support structure 300 branches towards tool holder 333 and towards a second end, at which a stand base 334 is provided. The stand base 334 may be an elastic element, such as a rubber cube or other rubber body. The modular support structure 300 of Fig. 9D allows reducing loads transferred by modular support structure 300, i.e., away from core unit 200 and towards stand base 334. Thus, the user 1000 does not receive the full load via core unit 200, i.e., the vest 210 and/or belt 215. This is particularly advantageous, if the user 1000 has to operate a tool 1050 in front of the user 1000, whereby a lever arm of the tool 1050 with respect to the core unit 200 would induce a high momentum into core unit 200.

The wearable apparatus 100 may further comprise at least one inflatable cushion 800 as illustrated in Fig. 9E. The inflatable cushion 800 may be inflated or deflated by a pump 810. Deflation may also be achieved via a valve (not shown). Furthermore, energy can be provided to the pump 810 from energy supply 260, while control of the pump 810 and/or a valve may be achieved by control unit 250. The at least one inflatable cushion 800 may alternatively self-inflatable or not inflatable at all. In any case, the cushion 800 can include a foam-based material.

While the at least one inflatable cushion 800 is illustrated as being provided at a limb or torso of the user, it is understood that the at least one inflatable cushion 800 can be attached to any part of the core unit 200 and/or any part of the modular support structure 200.

The above variants of implementation and use were described with respect to a tool 1050 and corresponding tool holder 333. It is to be understood that the modular support structure 300 can also be used to hold a workpiece or other corpus for installation. To this end, the modular support structure 300 may be provided with a corresponding workpiece holder (not shown).

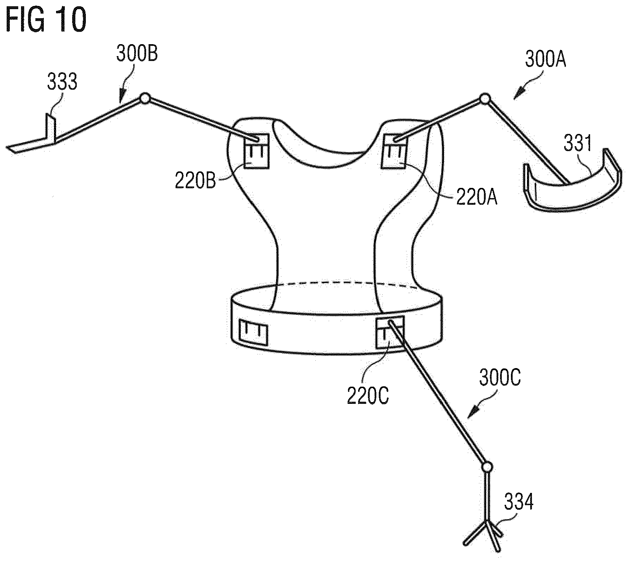

Advantages of the wearable apparatus 100 are now explained with respect to Figure 10. In particular, one or more modular support structures 300 can be connected to the core unit 200 of the wearable apparatus 100 depending on the task to be performed. On the one hand, the modular support structure(s) 300 can be exchanged in a fast manner during performing a task, e.g., exchanging an armrest with a tool holder or vice versa. On the other hand, multiple modular support structure 300 can be connected to the core unit 200 for performing the same task. For instance, the user may require two armrests for a left and right arm, may require an armrest and a tool holder at different positions, e.g., the arm rest for a left arm and the tool holder for holding a tool operated with a right hand of the user.

Figure 10 depicts a core unit 200, to which three modular support structures 300 are connected via respective first interfaces 220A, 220B, 220C. A first modular support structure 300A includes an armrest for a left arm of the user, while a second modular support structure 300B includes a tool holder or workpiece holder. A third modular support structure 300C, which supports the core unit 200 and, hence, the user with respect to a floor, is connected to one of the first interfaces (220C) provided on a bottom part of the core unit 200.

It is to be understood, that the wearable apparatuses 100 illustrated in the drawings and described above are not restricted to the illustrated forms thereof. The present disclosure rather includes any combination of a core unit 200 and one or more modular support structures 300.

## Claims

1. Wearable apparatus (100) for assisting a human (1000) when performing a load-involved task, the wearable apparatus (100) comprising:
- a core unit (200) including:
-- a vest (210) and/or belt (215) wearable on a torso, shoulder and/or hip of the human (1000), and
-- a plurality of first interfaces (220) fixed to the vest (210) and/or belt (215) at opposite lateral sides thereof; and
- a modular support structure (300) including:
-- a second interface (310) configured to be detachably connected to any one of the plurality of first interfaces (220), the second interface (310) including at least one receiving section (315),
-- at least one rod (320) configured to be detachably coupled to the receiving section (315), and
-- at least one support module (330) coupled to one of the at least one rod (320) and configured to support a limb (1010) of the human (1000) and/or a tool (1050) employed for the task.

2. The wearable apparatus (100) according to claim 1, wherein the modular support structure (300) further includes:
-- a joint (340) configured to be connected to the at least one rod (320) and the at least one support module (330) or configured to be connected to the at least one rod (320) and the second interface (310) or configured to be connected to two of the rods (320).

3. The wearable apparatus (100) according to claim 2, wherein the joint (340) has none, one, two or three degrees of freedom and can be fixed in a certain position, and/or wherein the joint (340) is configured to be connected to two or more of the at least one rod (320) on a same side of the joint (340) forming a portion of a parallel linkage (347).

4. The wearable apparatus (100) according to one of claims 1 to 3, wherein the modular support structure (300) further includes:
-- a slider (400) configured to be slidably coupled with one of the at least one rod (320) and configured to be connected to another of the at least one rod (320) or the at least one support module (330).

5. The wearable apparatus (100) according to claim 4, wherein the slider (400) includes a hole (410) configured to receive a first bolt (515) of the at least one rod (320) or a second bolt (335) of the at least one support module (330), wherein the slider (400) further includes a fixation (420) to fix the first or second bolt (515, 335) in the hole (410).

6. The wearable apparatus (100) according to one of claims 1 to 5, wherein the modular support structure (300) further includes:
-- a branching element (350) configured to be coupled with a plurality of the at least one rod (320) and/or to be coupled with the at least one rod (320) and the at least one support module (330) and/or to be coupled with the second interface (310) and the at least one rod (320).

7. The wearable apparatus (100) according to one of claims 1 to 6, wherein the second interface (310) includes a quick fastener (317, 545) for detachably connecting the second interface (310) to the first interface (220) and/or wherein the second interface (310) includes a quick fastener (520) for detachably coupling the at least one rod (320) to the receiving section (315) of the second interface (310).

8. The wearable apparatus (100) according to one of claims 1 to 7, wherein the modular support structure (300) further includes:
-- a telescopic rod (600) having at least one end (605) configured to be connected to the second interface (310), to the at least one rod (320) and/or to the at least one support module (330).

9. The wearable apparatus (100) according to one of claims 1 to 8, wherein the at least one support module (330) is an armrest (331), a snake arm (332), a tool holder (333) or a stand base (334).

10. The wearable apparatus (100) according to one of claims 1 to 9, further comprising:
- an active unit (700) including one or more of:
-- an actuator (630, 710) configured for providing a force to the at least one rod (320) and/or the at least one support module (330), the actuator (630, 710) being configured for supporting a movement of the modular support structure (300),
-- a control unit (250),
-- an energy supply (260), and
-- a sensor (720) configured for sensing a load or stress provided on a portion of the modular support structure (300).

11. The wearable apparatus (100) according to one of claims 1 to 10, further comprising:
- at least one inflatable cushion (800), and
- a pump (810) configured for inflating the at least one inflatable cushion (800).

12. The wearable apparatus (100) according to one of claims 1 to 11, wherein the core unit (200) further includes:
-- at least one rigid element (230, 240), wherein the at least one first interface (220) is fastened to one of the at least one rigid element (230, 240).

13. The wearable apparatus (100) according to claim 12, wherein the at least one rigid element (230, 240) is connected to the vest (210) in an area of the chest, shoulder, upper back, lower back and/or waist of the human (1000) when wearing the vest (210) and/or wherein the at least one rigid element (230, 240) is connected to the belt (215) in an area of the hip, waist, lumbus, and/or lower back of the human (1000) when wearing the belt (215).

14. Use of the wearable apparatus (100) according to one of claims 1 to 13 when performing a task during manufacturing of an aircraft.

## Patentansprüche

1. Tragbare Einrichtung (100) zur Unterstützung für einen Menschen (1000) beim Durchführen einer Aufgabe, an der eine Last beteiligt ist, wobei die tragbare Einrichtung (100) Folgendes umfasst:
- eine Kerneinheit (200), die Folgendes beinhaltet:
• eine Weste (210) und/oder einen Gurt (215), die/der am Oberkörper, Schulter und/oder Hüfte des Menschen (1000) tragbar ist, und
• mehrere erste Anschlussstellen (220), die an der Weste (210) und/oder dem Gurt (215) an deren gegenüberliegenden Seitenflächen befestigt sind; und
- eine modulare Stützstruktur (300), die Folgendes beinhaltet:
• eine zweite Anschlussstelle (310), die dazu ausgelegt ist, abnehmbar mit einer beliebigen aus den mehreren ersten Anschlussstellen (220) verbunden zu werden, wobei die zweite Anschlussstelle (310) mindestens einen Aufnahmeabschnitt (315) umfasst,
• mindestens einen Stab (320), der dazu ausgelegt ist, abnehmbar mit dem Aufnahmeabschnitt (315) gekoppelt zu werden, und
• mindestens ein Stützmodul (330), das mit einem aus dem mindestens einen Stab (320) gekoppelt ist und dazu ausgelegt ist, eine Gliedmaße (1010) des Menschen (1000) und/oder ein für die Aufgabe eingesetztes Werkzeug (1050) zu stützen.

2. Tragbare Einrichtung (100) nach Anspruch 1, wobei die modulare Stützstruktur (300) ferner beinhaltet:
• ein Gelenk (340), das dazu ausgelegt ist, mit dem mindestens einen Stab (320) und dem mindestens einen Stützmodul (330) verbunden zu werden, oder das dazu ausgelegt ist, mit dem mindestens einen Stab (320) und der zweiten Anschlussstelle (310) verbunden zu werden, oder das dazu ausgelegt ist, mit zweien der Stäbe (320) verbunden zu werden.

3. Tragbare Einrichtung (100) nach Anspruch 2, wobei das Gelenk (340) keinen, einen, zwei oder drei Freiheitsgrade aufweist und in einer bestimmten Stellung fixiert werden kann und/oder wobei das Gelenk (340) dazu ausgelegt ist, mit zwei oder mehreren aus dem mindestens einen Stab (320) an einer gleichen Seite des Gelenks (340) verbunden zu werden, wodurch ein Abschnitt einer parallelen Verknüpfung (347) ausgebildet wird.

4. Tragbare Einrichtung (100) nach einem der Ansprüche 1 bis 3, wobei die modulare Stützstruktur (300) ferner beinhaltet:
• einen Schieber (400), der dazu ausgelegt ist, verschiebbar mit einem aus dem mindestens einen Stab (320) gekoppelt zu werden, und dazu ausgelegt ist, mit einem anderen aus dem mindestens einen Stab (320) oder dem mindestens einen Stützmodul (330) verbunden zu werden.

5. Tragbare Einrichtung (100) nach Anspruch 4, wobei der Schieber (400) eine Bohrung (410) beinhaltet, die dazu ausgelegt ist, einen ersten Bolzen (515) des mindestens einen Stabs (320) oder einen zweiten Bolzen (335) des mindestens einen Stützmoduls (330) aufzunehmen, wobei der Schieber (400) ferner eine Befestigung (420) zum Fixieren des ersten oder des zweiten Bolzens (515, 335) in der Bohrung (410) beinhaltet.

6. Tragbare Einrichtung (100) nach einem der Ansprüche 1 bis 5, wobei die modulare Stützstruktur (300) ferner beinhaltet:
• ein Verzweigungselement (350), das dazu ausgelegt ist, mit mehreren aus dem mindestens einen Stab (320) gekoppelt zu werden und/oder mit dem mindestens einen Stab (320) und dem mindestens einen Stützmodul (330) gekoppelt zu werden und/oder mit der zweiten Anschlussstelle (310) und dem mindestens einen Stab (320) gekoppelt zu werden.

7. Tragbare Einrichtung (100) nach einem der Ansprüche 1 bis 6, wobei die zweite Anschlussstelle (310) einen Schnellverschluss (317, 545) zum abnehmbaren Verbinden der zweiten Anschlussstelle (310) mit der ersten Anschlussstelle (220) beinhaltet und/oder wobei die zweite Anschlussstelle (310) einen Schnellverschluss (520) zum abnehmbaren Koppeln des mindestens einen Stabs (320) mit dem Aufnahmeabschnitt (315) der zweiten Anschlussstelle (310) beinhaltet.

8. Tragbare Einrichtung (100) nach einem der Ansprüche 1 bis 7, wobei die modulare Stützstruktur (300) ferner beinhaltet:
• einen Teleskopstab (600), der mindestens ein Ende (605) aufweist, das dazu ausgelegt ist, mit der zweiten Anschlussstelle (310), mit dem mindestens einen Stab (320) und/oder mit dem mindestens einen Stützmodul (330) verbunden zu werden.

9. Tragbare Einrichtung (100) nach einem der Ansprüche 1 bis 8, wobei das mindestens eine Stützmodul (330) eine Armstütze (331), ein Manipulartorarm (332), ein Werkzeughalter (333) oder ein Standfuß (334) ist.

10. Tragbare Einrichtung (100) nach einem der Ansprüche 1 bis 9, die ferner Folgendes umfasst:
- eine Aktiveinheit (700), die eins oder mehrere aus Folgenden beinhaltet:
• einen Aktor (630, 710), der dazu ausgelegt ist, eine Kraft auf den mindestens einen Stab (320) und/oder das mindestens eine Stützmodul (330) aufzubringen, wobei der Aktor (630, 710) dazu ausgelegt ist, eine Bewegung der modularen Stützstruktur (300) zu unterstützen,
• eine Steuereinheit (250),
• eine Stromversorgung (260) und
• einen Sensor (720), der dazu ausgelegt ist, eine Last oder einen Druck zu erfassen, die bzw. der auf einen Abschnitt der modularen Stützstruktur (300) aufgebracht ist.

11. Tragbare Einrichtung (100) nach einem der Ansprüche 1 bis 10, die ferner Folgendes umfasst:
- mindestens ein aufblasbares Kissen (800) und
- eine Pumpe (810), die dazu ausgelegt ist, das mindestens eine aufblasbare Kissen (800) aufzublasen.

12. Tragbare Einrichtung (100) nach einem der Ansprüche 1 bis 11, wobei die Kerneinheit (200) ferner beinhaltet:
• mindestens ein steifes Element (230, 240), wobei die mindestens eine erste Anschlussstelle (220) an einem aus dem mindestens einen steifen Element (230, 240) befestigt ist.

13. Tragbare Einrichtung (100) nach Anspruch 12, wobei das mindestens eine steife Element (230, 240) mit der Weste (210) in einem Bereich der Brust, der Schulter, des oberen Rückens, des unteren Rückens und/oder der Taille des Menschen (1000) verbunden ist, wenn er die Weste (210) trägt, und/oder wobei das mindestens eine steife Element (230, 240) mit dem Gurt (215) in einem Bereich der Hüfte, der Taille, der Lende und/oder des unteren Rückens des Menschen (1000) verbunden ist, wenn er den Gurt (215) trägt.

14. Verwendung der tragbaren Einrichtung (100) nach einem der Ansprüche 1 bis 13 bei Durchführen einer Aufgabe während der Herstellung eines Flugzeugs.

## Revendications

1. Appareil portable (100) pour aider un humain (1000) lors de la réalisation d'une tâche impliquant une charge, l'appareil portable (100) comprenant :
- une unité centrale (200) incluant :
- un gilet (210) et/ou une ceinture (215) portable sur un torse, une épaule et/ou une hanche de l'humain (1000), et
- une pluralité de premières interfaces (220) fixées au gilet (210) et/ou à la ceinture (215) sur des côtés latéraux opposés de celui/celle-ci ; et
- une structure de support modulaire (300) incluant :
- une seconde interface (310) configurée pour être raccordée de façon détachable à une quelconque de la pluralité de premières interfaces (220), la seconde interface (310) incluant au moins une section de réception (315),
- au moins une tige (320) configurée pour être couplée de façon détachable à la section de réception (315), et
- au moins un module de support (330) couplé à une de l'au moins une tige (320) et configuré pour supporter un membre (1010) de l'humain (1000) et/ou un outil (1050) employé pour la tâche.

2. Appareil portable (100) selon la revendication 1, dans lequel la structure de support modulaire (300) inclut en outre :
- un joint (340) configuré pour être raccordé à l'au moins une tige (320) et l'au moins un module de support (330) ou configuré pour être raccordé à l'au moins une tige (320) et la seconde interface (310) ou configuré pour être raccordé à deux des tiges (320).

3. Appareil portable (100) selon la revendication 2, dans lequel le joint (340) a un, deux ou trois degrés de liberté ou n'en a aucun, et peut être fixé dans une certaine position et/ou dans lequel le joint (340) est configuré pour être raccordé à deux ou plus de l'au moins une tige (320) sur un même côté du joint (340) formant une portion d'une tringlerie parallèle (347).

4. Appareil portable (100) selon l'une des revendications 1 à 3, dans lequel la structure de support modulaire (300) inclut en outre :
- un coulisseau (400) configuré pour être couplé de façon coulissante à une de l'au moins une tige (320) et configuré pour être raccordé à une autre de l'au moins une tige (320) ou l'au moins un module de support (330).

5. Appareil portable (100) selon la revendication 4, dans lequel le coulisseau (400) inclut un trou (410) configuré pour recevoir un premier boulon (515) de l'au moins une tige (320) ou un second boulon (335) de l'au moins un module de support (330), dans lequel le coulisseau (400) inclut en outre une fixation (420) pour fixer le premier ou second boulon (515, 335) dans le trou (410).

6. Appareil portable (100) selon l'une des revendications 1 à 5, dans lequel la structure de support modulaire (300) inclut en outre :
- un élément à ramification (350) configuré pour être couplé à une pluralité de l'au moins une tige (320) et/ou pour être couplé à l'au moins une tige (320) et l'au moins un module de support (330) et/ou pour être couplé à la seconde interface (310) et l'au moins une tige (320).

7. Appareil portable (100) selon l'une des revendications 1 à 6, dans lequel la seconde interface (310) inclut un élément de fixation rapide (317, 545) pour raccorder de façon détachable la seconde interface (310) à la première interface (220) et/ou dans lequel la seconde interface (310) inclut un élément de fixation rapide (520) pour coupler de façon détachable l'au moins une tige (320) à la section de réception (315) de la seconde interface (310).

8. Appareil portable (100) selon l'une des revendications 1 à 7, dans lequel la structure de support modulaire (300) inclut en outre :
- une tige télescopique (600) ayant au moins une extrémité (605) configurée pour être raccordée à la seconde interface (310), à l'au moins une tige (320) et/ou à l'au moins un module de support (330).

9. Appareil portable (100) selon l'une des revendications 1 à 8, dans lequel l'au moins un module de support (330) est un accoudoir (331), un bras en serpent (332), un porte-outil (333) ou une base d'appui (334).

10. Appareil portable (100) selon l'une des revendications 1 à 9, comprenant en outre :
- une unité active (700) incluant un ou plusieurs de :
- un actionneur (630, 710) configuré pour fournir une force à l'au moins une tige (320) et/ou l'au moins un module de support (330), l'actionneur (630, 710) étant configuré pour supporter un mouvement de la structure de support modulaire (300),
- une unité de commande (250),
- une alimentation en énergie (260), et
- un capteur (720) configuré pour détecter une charge ou contrainte fournie sur une portion de la structure de support modulaire (300).

11. Appareil portable (100) selon l'une des revendications 1 à 10, comprenant en outre :
- au moins un coussin gonflable (800), et
- une pompe (810) configurée pour gonfler l'au moins un coussin gonflable (800).

12. Appareil portable (100) selon l'une des revendications 1 à 11, dans lequel l'unité centrale (200) inclut en outre :
- au moins un élément rigide (230, 240), dans lequel l'au moins une première interface (220) est fixée à un de l'au moins un élément rigide (230, 240).

13. Appareil portable (100) selon la revendication 12, dans lequel l'au moins un élément rigide (230, 240) est raccordé au gilet (210) dans une zone de la poitrine, de l'épaule, du haut du dos, du bas du dos et/ou de la taille de l'humain (1000) lorsqu'il porte le gilet (210) et/ou dans lequel l'au moins un élément rigide (230, 240) est raccordé à la ceinture (215) dans une zone de la hanche, de la taille, de la région lombaire et/ou du bas du dos de l'humain (1000) lorsqu'il porte la ceinture (215).

14. Utilisation de l'appareil portable (100) selon l'une des revendications 1 à 13 lors de la réalisation d'une tâche durant la fabrication d'un aéronef.
